# EUROPEAN PATENT APPLICATION

(11) **EP 2 928 219 A1**
(43) Date of publication of application: **07.10.2015**
(21) Application number: 15162328.7
(22) Date of filing: 02.04.2015
(51) Int. Cl.: H04W 4/02, G06F 9/44

(54) **RESTRICTION INFORMATION DISTRIBUTION APPARATUS AND RESTRICTION INFORMATION DISTRIBUTION SYSTEM**

(30) Priority: 03.04.2014 JP 2014076713
(71) Applicant: Clarion Co., Ltd., Saitama 330-0081 (JP)
(72) Inventor: KONDO, Akihiro, Tokyo, 100-8280 (JP); ABE, Noriyuki, Saitama, 330-0081 (JP); OKAMOTO, Kimio, Saitama, 330-0081 (JP); SEKIGUCHI, Takaaki, Tokyo, 100-8280 (JP)
(74) Representative: MERH-IP Matias Erny Reichl Hoffmann

(57) **Abstract**

Provided is a technology for dealing with display restrictions more easily. A restriction information distribution apparatus includes: a storage unit configured to store software restriction information for specifying a restriction target unit regarding display information of software, component layout setting information for specifying a display mode corresponding to a model of a display device for each display component that is a restriction target unit, and component validity setting information for specifying whether or not to permit displaying of the display component depending on a region; a communication unit configured to receive, from an external device, software identification information, model identification information of an output device, and location information; a restriction information distribution unit configured to transmit the software restriction information corresponding to the software identification information to the external device; a location determination unit configured to determine the region based on the location information; and a layout distribution unit configuredto specify the component layout setting information corresponding to the model identification information and transmits, together with the component validity setting information corresponding to the region, the component layout setting information to the external device.

## Description

### Background of the Invention

The present invention relates to a technology for a restriction information distribution apparatus. The present invention claims priority to Japanese Patent Application No. 2014-076713 filed on April 3, 2014, the contents of which are incorporated herein by reference in its entirety for the designated states where incorporation by reference of literature is allowed.

As the background art of this technical field, there is disclosed a technology in Japanese Patent Laid-open Publication No. 2013-112135. According to the technology disclosed in Japanese Patent Laid-open Publication No. 2013-112135, an in-vehicle device includes a processing information acquisition unit, an analysis conversion unit, and a setting change unit. The processing information acquisition unit acquires, from a portable terminal device with which the in-vehicle device has established a communication link, processing information about processing performed on the portable terminal device by a user. The analysis conversion unit analyses the processing information acquired by the processing information acquisition unit to convert the information into operation setting information of the in-vehicle device. The setting change unit changes an operation setting state of the in-vehicle device based on the operation setting information generated by the analysis conversion unit.

The above-mentioned technology enables a mode of information presentation to follow a change in user's characteristics, preference, or the like. However, concerning restrictions on operations, displays, and a display method during traveling, there is a variety of combinations depending on a type of corresponding application software, a country in which a vehicle travels, and a manufacturer of a vehicle to which an in-vehicle terminal is mounted. Therefore, in terms of the chance of using an information terminal owned by the user in other countries, it is desired to be able to easily deal with a variety of restrictions or display means. The technology disclosed in Japanese Patent Laid-open Publication No. 2013-112135 can deal with a user's change, but not enough.

### Summary of the Invention

The present invention provides solutions to the above-mentioned problems, and it is an object thereof to facilitate dealing with display restrictions.

This application includes a plurality of solutions to at least some of the problems, and an example thereof is as follows. In order to solve the above-mentioned problems, according to one embodiment of the present invention, there is provided a restriction information distribution apparatus including: a storage unit configuredto store software restriction information for specifying a re strict ion target unit regarding display information of software, component layout setting information for specifying a display mode corresponding to a model of a device configured to display the display information for each display component, which is a restriction target unit of the software, and component validity setting information for specifying whether or not to permit displaying of the display component in a predetermined region; a communication unit configured to receive, from an external device, software identification information for identifying software that is likely to be executed, model identification information for identifying a model of an output device configured to output the display information of the software, and location information for specifying a location of the output device; a restriction information distribution unit configured to specify the software restriction information corresponding to the software identification information to transmit the software restriction information to the external device; a location determination unit configured to determine the predetermined region to which the location specified based on the location information belongs; and a layout distribution unit configured to specify the component layout setting information corresponding to the model identification information and transmit, together with the component validity setting information corresponding to the predetermined region determined by the location determination unit, the component layout setting information to the external device.

According to the one embodiment of the present invention, the display restrictions can be dealt with more easily. Other objects, configurations, and effects become apparent from the following description of the embodiments.

### Brief Description of the Drawings

FIG. 1 is a diagram illustrating a configuration example of a restriction information distribution system according to an embodiment of the present invention.
FIG. 2 is a diagram illustrating an example of restrictions on a display screen.
FIG. 3 is a diagram illustrating a configuration example of a server apparatus.
FIG. 4 is a diagram illustrating a configuration example of an information terminal and a navigation device.
FIG. 5 is a diagram showing a data structure of a software restriction information storage unit.
FIG. 6 is a diagram showing a data structure of a component layout setting storage unit.
FIG. 7 is a diagram showing a data structure of a component validity setting storage unit.
FIG. 8 is a diagram illustrating a configuration of hardware constructing the restriction information distribution system.
FIG. 9 is a diagram illustrating a flow of restriction information distribution processing.
FIG. 10 is a diagram illustrating an example of a difference of screen displaying based on a difference of software restriction information.
FIG. 11 is a diagram illustrating an example of a difference of screen displaying based on a difference of component layout setting.
FIG. 12 is a diagram illustrating an example of a difference of screen displaying based on a difference of component validity setting.
FIG. 13 is a diagram illustrating a configuration example of a restriction information distribution system according to a second embodiment of the present invention.
FIG. 14 is a diagram illustrating a flow of restriction information distribution processing according to the second embodiment.
FIG. 15 is a diagram illustrating a configuration example of a restriction information distribution system according to a third embodiment of the present invention.

### Description of the Preferred Embodiments

Now, an example of a restriction information distribution system 1 according to an embodiment of the present invention is described referring to the drawings.

In recent years, a variety of contents including moving images, images, voice, and character strings has been provided to an in-vehicle device represented by a car navigation device. Further, even an in-vehicle device operated in cooperation with an information terminal such as a smartphone has emerged, and not only application software in the in-vehicle device but also application software provided to be operable on the information terminal side can now be operated via an input unit of the in-vehicle device side. In addition, in an operation of the application in the in-vehicle device, in order to carry out communication to/from a predetermined external server apparatus, the application can now be connected to a network such as the Internet via a communication unit provided in the information terminal.

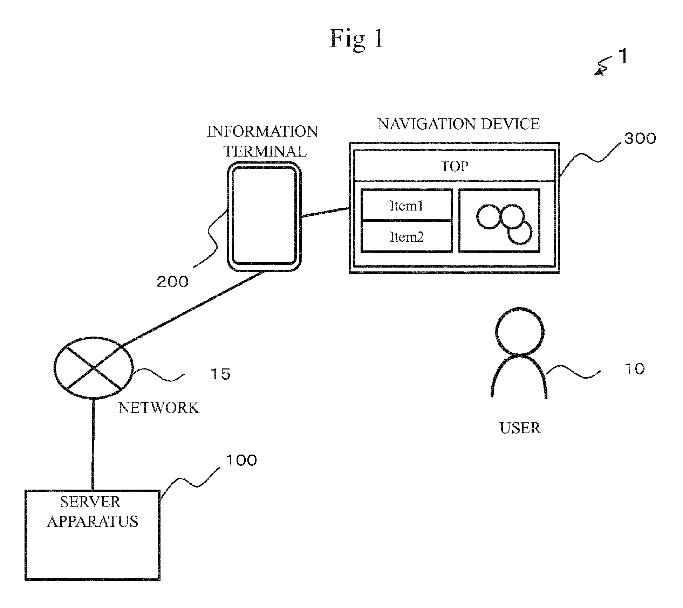

FIG. 1 is a diagram illustrating a configuration example of the overall restriction information distribution system 1 according to a first embodiment of the present invention. As illustrated in FIG. 1, a server apparatus 100 that is a restriction information distribution apparatus, an information terminal 200 that can communicate to/from the server apparatus 100 via a network 15 such as the Internet, and a navigation device 300 that is an in-vehicle device connected to the information terminal 200 by wire or wireless so as to be able to communicate can be operated in cooperation.

The restriction information distribution system 1 includes the server apparatus 100, the information terminal 200 that can communicate to/from the server apparatus 100 via the network 15 including a mobile phone network, a packet exchange network, or an Internet network, and the navigation device 300 that can be connected to the information terminal 200 through near field communication such as a wireless local area network (LAN), Bluetooth (trademark), or Near Field Communication (NFC), or through wired communication via a communication cable such as a universal serial bus (USB) or a high definition multimedia interface (HDMI).

According to this embodiment, the information terminal 200 includes general mobile devices such as a wireless communication router, a smartphone terminal, and a so-called tablet terminal independently operated and connected to the Internet or the like so as to be able to communicate. The navigation device 300 includes, for example, a navigation device fitted to a mobile body or a portable navigation device fitted to the mobile body but independently operable even in a removed state.

According to this embodiment, a user 10 can operate not only the navigation device 300 by using an input/output interface of the navigation device 300 but also software installed in the information terminal 200 by using the input/output interface of the navigation device 300.

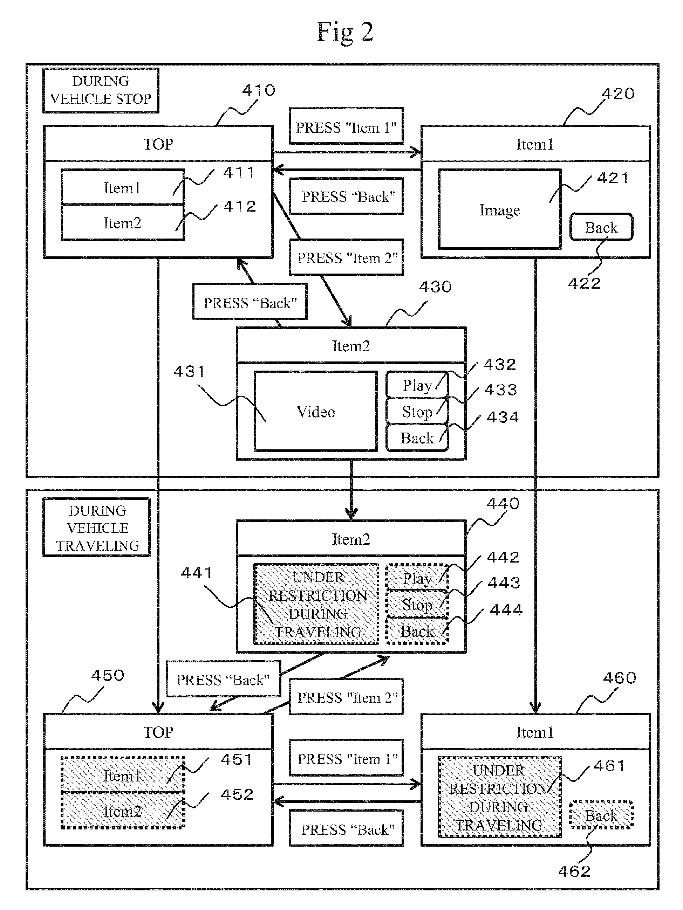

FIG. 2 is a diagram illustrating an example of restrictions on a display screen that is an output from the software installed in the information terminal 200. The display screen, which is the output from the software installed in the information terminal 200, is displayed and output on the navigation device 300 to which the information terminal 200 is connected.

The navigation device 300 is used by being fitted to the mobile body such as a vehicle. However, even in the case of information that can be displayed in a stopped state of the vehicle to which the navigation device 300 has been fitted, displaying of the information may need to be restricted in a traveling state of the vehicle. For example, in a country or a region where moving image information is inhibited from being output during traveling, it is desired to permit reproduction of a moving image in the stopped state but stop the reproduction of the moving image or hide a display during traveling.

Referring to FIG. 2, as the display screen that is the output from the software installed in the information terminal 200, during a stop of the vehicle, a "TOP" (top) screen 410, an "Item1" (transition destination 1 from top) screen 420, and an "Item 2" (transition destination 2 from top) screen 430 are displayed and, during traveling of the vehicle, a "TOP" (top) restriction screen 450, an "Item 1" (transition destination 1 from top) restriction screen 460, and an "Item 2" (transition destination 2 from top) restriction screen 440 are displayed.

The "TOP" restriction screen 450, the "Item 1" (transition destination 1 from top) restriction screen 460, and the "Item 2" (transition destination 2 from top) restriction screen 440 displayed during the traveling of the vehicle are respectively superimposed on the "TOP" screen 410, the "Item 1" screen 420, and the "Item 2" screen 430, which are output display screens from the software, in a manner of preventing a restriction display component from being transmitted to an upper layer, and accordingly the "TOP" restriction screen 450, the "Item 1" restriction screen 460, and the "Item 2" restriction screen 440 are achieved. For a component that receives an input such as a button, it is desired to not only change its displaying but also impose input restrictions. However, the input restrictions do not always need to be imposed. The restriction display component superimposed on the upper layer to be displayed does not always need to be prevented from being transmitted. For example, the restriction display component may be displayed in a mosaic manner.

The "TOP" screen 410 includes an "Item 1" button 411 for receiving a screen transition instruction to the "Item 1" screen 420, and an "Item 2" button 412 for receiving a screen transition instruction to the "Item 2" screen 430.

The "Item 1" screen 420 includes an image component display area 421 as a component in which image information such as a still image or a photograph is displayed, and a "Back" button 422 for receiving a screen transition instruction to the "TOP" screen 410.

The "Item 2" screen 430 includes a video component display area 431 as a component in which video information such as a moving image or a video is displayed, a "Play" button 432 for receiving a reproduction start instruction of the video information, a "Stop" button 433 for receiving a reproduction end instruction of the video information, and a "Back" button 434 for receiving a screen transition instruction to the "TOP" screen 410.

The "TOP" restriction screen 450 includes an "Item 1" restriction button 451 for receiving a screen transition instruction to the "Item 1" restriction screen 460, and an "Item 2" restriction button 452 for receiving a screen transition instruction to the "Item 2" restriction screen 440.

The "Item1" restriction screen 460 includes an image component display area 461 as a component in which image information such as a still image or a photograph is displayed, and a "Back" button 462 for receiving a screen transition instruction to the "TOP" restriction screen 450. Note however that in the image component display area 461, an opaque mask component defined by, for example, Hyper Text Markup Language (HTML) is superimposed on a display location of the image component display area 421 during the stop of the vehicle, thus disabling viewing of the image information displayed in the image component display area 421.

The "Item 2" restriction screen 440 includes a video component display area 441 as a component in which video information such as a moving image or a video is displayed, a "Play" button 442 for receiving a reproduction start instruction of the video information, a "Stop" button 443 for receiving a reproduction end instruction of the video information, and a "Back" button 444 for receiving a screen transition instruction to the "TOP" restriction screen 450. Note however that in the video component display area 441, an opaque mask component defined by, for example, the HTML is superimposed on a display location of the video component display area 431 during the stop of the vehicle, thus disabling viewing of the video information displayed in the video component display area 431.

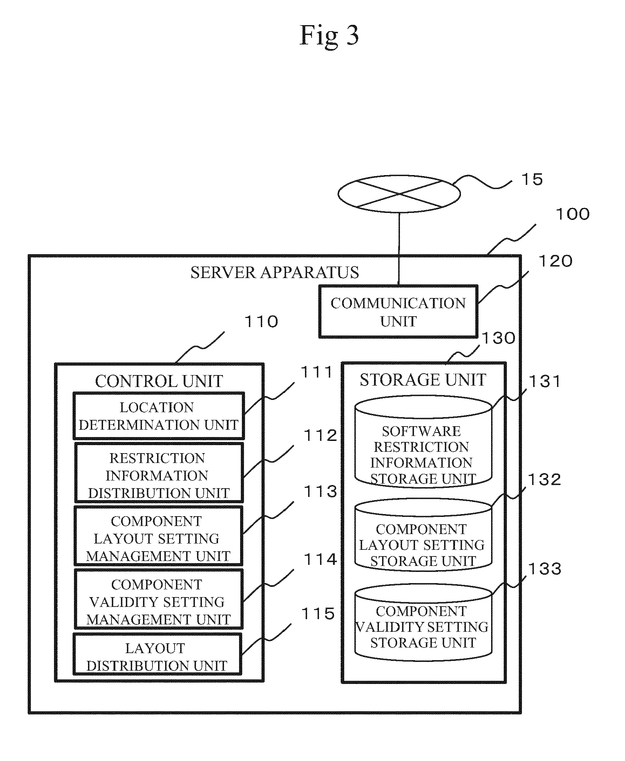

FIG. 3 is a diagram illustrating a configuration of the server apparatus 100 according to this embodiment. The server apparatus 100 includes a control unit 110, a communication unit 120, and a storage unit 130. The control unit 110 includes a location determination unit 111, a restriction information distribution unit 112, a component layout setting management unit 113, a component validity setting management unit 114, and a layout distribution unit 115.

The location determination unit 111 outputs, when receiving location information of a coordinate system such as longitude and latitude, location information for determining a predetermined region within a geographic range divided based on a predetermined reference such as a local region, a country, or a city. In other words, the location determination unit 111 determines which of the predetermined regions a location specified by the location information belongs to.

The restriction information distribution unit 112 refers, when receiving at least one piece of software identification information, to a software restriction information storage unit 131 to specify software restriction information for each software identification information, and distributes the software restriction information to another device via the communication unit 120. In other words, the restriction information distribution unit 112 specifies the software restriction information corresponding to the software identification information to transmit the software restriction information to the external device.

The component layout setting management unit 113 manages component layout setting information storing layout information such as a character size, a character string, a character font, or a display image of each component subjected to restriction. Specifically, the component layout setting management unit 113 refers, when receiving model identification information, to a component layout setting storage unit 132 to specify the component layout setting information corresponding to the model identification information.

The component validity setting management unit 114 manages component validity setting information including designation as to whether or not to display each component subjected to restriction. Specifically, the component validity setting management unit 114 refers to a component validity setting storage unit 133 to specify the component validity setting information in accordance with the predetermined region determined by the location determination unit 111.

The layout distribution unit 115 transmits the component layout setting information specified by the component layout setting management unit 113 and the component validity setting information specified by the component validity setting management unit 114 to another device via the communication unit 120. In other words, the layout distribution unit 115 specifies the component layout setting information corresponding to the model identification information, and transmits the component layout setting information together with the component validity setting information corresponding to the predetermined region determined by the location determination unit 111 to the external device.

The communication unit 120 communicates to/from another device connected to the network 15 such as the Internet. In other words, the communication unit 120 receives pieces of information to be received by the location determination unit 111, the restriction information distribution unit 112, the component layout setting management unit 113, and the component validity setting management unit 114 from another device.

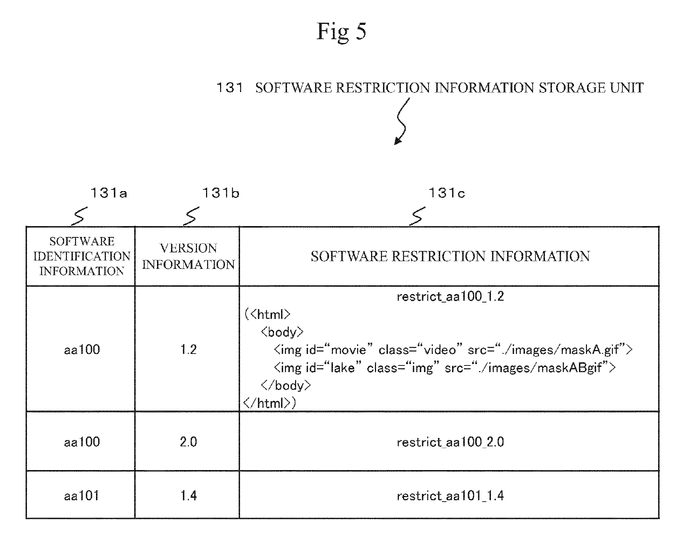

The storage unit 130 includes the software restriction information storage unit 131, the component layout setting storage unit 132, and the component validity setting storage unit 133. The software restriction information storage unit 131 stores information of restrictions on software that is likely to be executed in the traveling state of the vehicle including the navigation device 300. Specifically, as shown in FIG. 5, the software restriction information storage unit 131 stores software restriction information containing a mask component for hiding a part to be displayed or a button component for transmitting software operation information.

FIG. 5 is a diagram showing an example of a data structure of the software restriction information storage unit 131. In the software restriction information storage unit 131, software identification information 131a for uniquely identifying software, version information 131b for specifying a software version, and software restriction information 13c that is transition information of a screen to be restricted and information for specifying a restriction component to be restricted on the screen are associated with one another. For example, the software restriction information 131c is information represented by the HTML, and image elements that are components included in the screen are an information set described in accordance with a rule such as representation by an image tag.

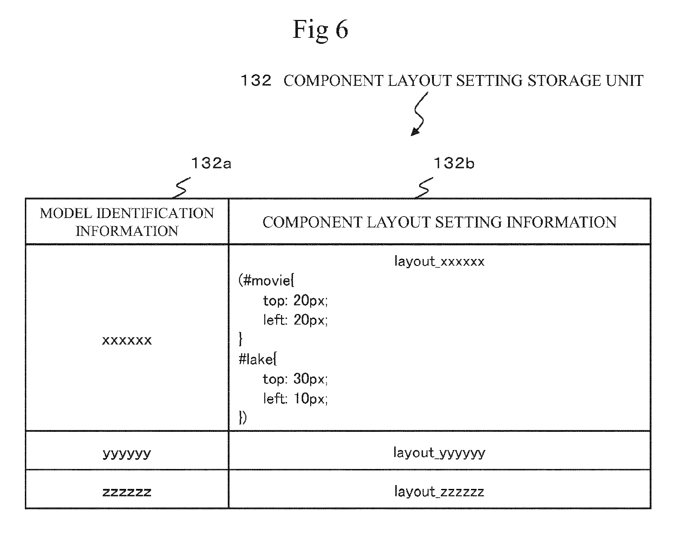

FIG. 6 is a diagram showing an example of a data structure of the component layout setting storage unit 132. In the component layout setting storage unit 132, model identification information 132a for uniquely identifying a model of the navigation device, and component layout setting information 132b for specifying settings regarding displaying such as a component display size for each model identified by the model identification information 132a are associated with each other. The component layout setting information 132b only needs to contain information used for restricting display information of the software. For example, the component layout setting information 132b may be an image of a mask component for hiding a display. The component layout setting information 132b may also be, for example, information about a display location of the button component, an image of the button, or a character size, a character font, or a character color of a character component. In other words, a display mode included in the component layout setting information 132b only needs to include at least one of information for defining a location of displaying the component, information for defining a size of the component, or information for defining an appearance of the component.

Further, the component layout setting information 132b may also be information for changing a language used for displaying based on language setting information of the information terminal 200 and the navigation device 300. For example, the component layout setting information 132b is information represented by cascading style sheets (CSS), and constructs an information set described to include information designating a horizontal height of image elements that are components included in the screen or a location of the image elements on the screen such as a left end location. However, not limited to the CSS, the component layout setting information 132b may be represented by extensible Markup Language (XML).

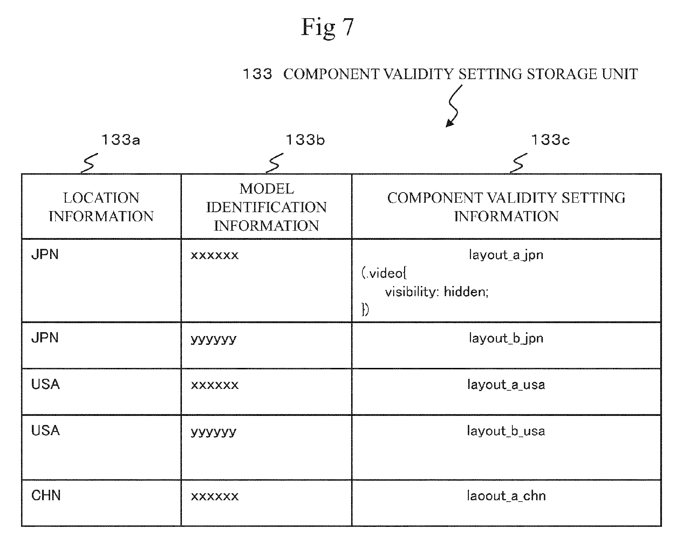

FIG. 7 is a diagram showing an example of a data structure of the component validity setting storage unit 133. In the component validity setting storage unit 133, location information 133a for uniquely identifying a local region or a country, model identification information 133b for uniquely identifying a model of the navigation device, and component validity setting information 133c are associated with one another. The component validity setting information 133c includes designation as to whether or not to display (permit or inhibit displaying of) a component of a unit defined by the software restriction information 131c. For example, the component validity setting information 133c is information represented by the CSS or the like, and is an information set described to include information designating a visible or invisible state of the image elements that are components included in the screen.

In other words, the storage unit 130 stores the software restriction information for specifying a restriction target unit regarding the display information of the software, the component layout setting information for specifying the display mode corresponding to the model of the device for displaying the display information for each display component that is a restriction target unit of the software, and the component validity setting information for specifying whether or not to permit displaying of the display component depending on the predetermined region.

The outline of the configuration of the server apparatus 100 has been described. The server apparatus 100 is typically a general-purpose computer. Not limited to this, however, the server apparatus 100 may be an electronic information terminal such as a personal computer, a mobile phone terminal, a tablet terminal, or a personal digital assistant (PDA).

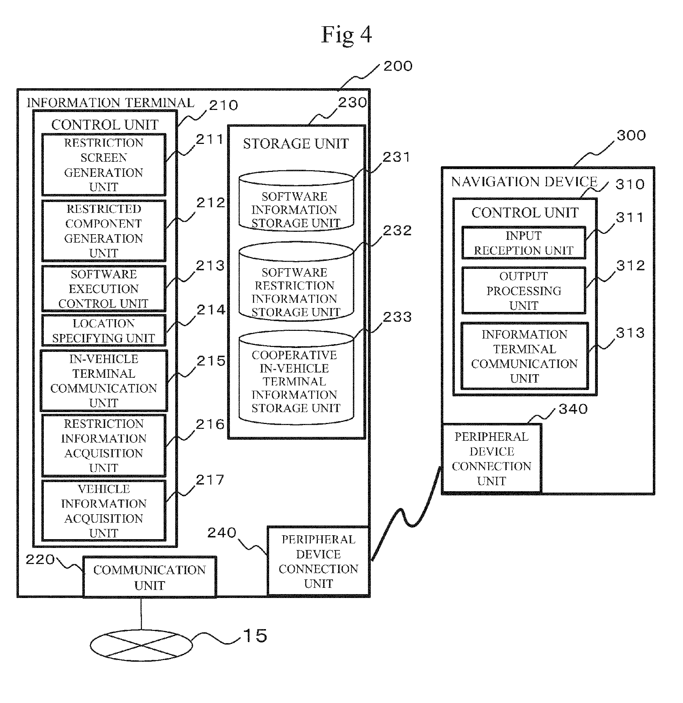

FIG. 4 is a diagram illustrating a configuration of the information terminal 200 and the navigation device 300 according to this embodiment. The information terminal 200 includes a control unit 210, a communication unit 220, a storage unit 230, and a peripheral device connection unit 240. The control unit 210 includes a restriction screen generation unit 211, a restricted component generation unit 212, a software execution control unit 213, a location specifying unit 214, an in-vehicle terminal communication unit 215, a restriction information acquisition unit 216, and a vehicle information acquisition unit 217.

The restriction screen generation unit 211 generates, during the traveling of the vehicle, for a display screen generated by the software execution control unit 213, screen information for disclosing a restricted result to the user by using display information of a restricted component generated by the restricted component generation unit 212.

The restricted component generation unit 212 generates a display component to be used when the display screen generated by the software execution control unit 213 is restricted. The restricted component generation unit 212 manages, on-memory, cache information (hereinafter also referred to as layout cache) storing layout information that affects a restriction screen.

The software execution control unit 213 controls software operable in the information terminal 200 to operate. The software execution control unit 213 generates the display screen by using information output from the operated software.

The location specifying unit 214 calculates information for specifying a location of a coordinate system represented by latitude and longitude by using information of a global positioning system (GPS) or an acceleration sensor.

The in-vehicle terminal communication unit 215 transmits and receives information to/from the navigation device 300 that is an in-vehicle terminal.

The restriction information acquisition unit 216 transmits, to the server apparatus 100, software identification information for identifying software that is likely to be executed, model identification information for identifying a model of the navigation device 300 that is an output device configured to output display information of the software, and information for specifying a location of the navigation device 300, and receives software restriction information, component layout setting information, and component validity setting information.

The vehicle information acquisition unit 217 determines which of a traveling state and a stopped state the vehicle is in by using a change amount of speed and location information of the vehicle including the navigation device 300.

The communication unit 220 communicates to/from another device connected to the network 15 such as the Internet.

The storage unit 230 includes a software information storage unit 231, a software restriction information storage unit 232, and a cooperative in-vehicle terminal information storage unit 233. The software information storage unit 231 stores, for software that is likely to be executed in the information terminal 200, information including software identification information and version information. The software restriction information storage unit 232 stores, when the vehicle including the navigation device 300 is in the traveling state, information of restriction for the software that is likely to be executed. The cooperative in-vehicle terminal information storage unit 233 stores information such as model identification information of the connected navigation device 300.

The peripheral device connection unit 240 establishes, maintains, or cuts off communication to/from a peripheral device connected to the information terminal 200. The peripheral device connection unit 240 communicates to/from the navigation device 300 through near field communication such as Bluetooth, a wireless LAN, or NFC, or through wired communication via a communication cable such as the USB or the HDMI, and connects to the navigation device 300.

The outline of the configuration of the information terminal 200 has been described. The information terminal 200 is typically a mobile device. Not limited to this, however, the information terminal 200 may be an electronic information terminal such as a personal computer, a mobile phone terminal, a tablet terminal, or a PDA.

The navigation device 300 includes a control unit 310 and a peripheral device connection unit 340. The control unit 310 includes an input reception unit 311, an output processing unit 312, and an information terminal communication unit 313.

The input reception unit 311 receives, among pieces of point information transmitted from a touch panel installed on the screen included in the navigation device 300, information about a screen operation such as pressing, releasing, or moving.

The output processing unit 312 displays a screen regarding software operated in the information terminal 200 and the navigation device 300. The information terminal communication unit 313 transmits and receives information to/from the information terminal 200.

The peripheral device connection unit 340 establishes, maintains, or cuts off communication to/from a peripheral device connected to the navigation device 300.

The outline of the configuration of the navigation device 300 has been described. The navigation device 300 is typically a navigation device as a dedicated device. Not limitedto this, however, the navigation device 300 may be an electronic information terminal such as a personal computer, a mobile phone terminal, a tablet terminal, or a PDA.

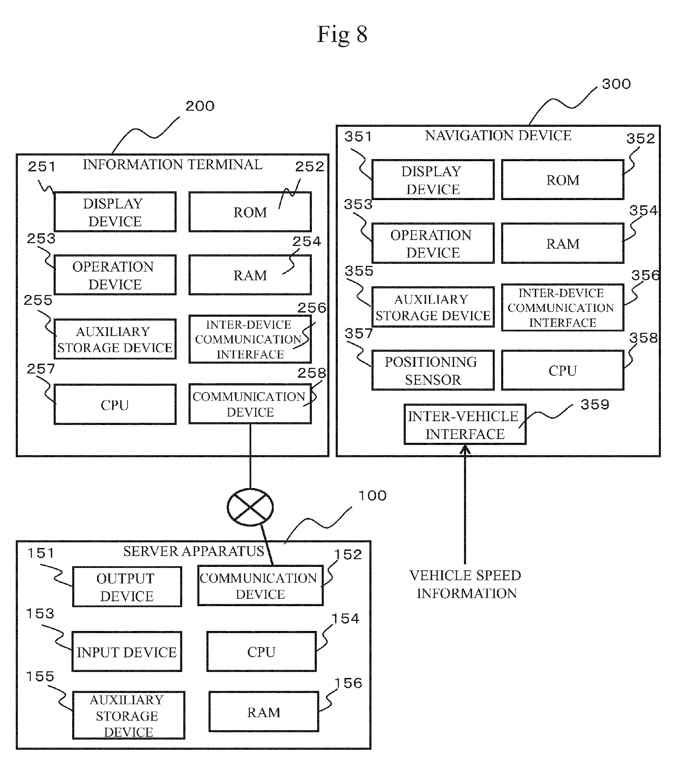

FIG. 8 is a diagram illustrating a hardware configuration of each device constructing the restriction information distribution system 1. The server apparatus 100 includes an output device 151 such as a display, a communication device 152 such as a network card, an input device 153 such as a keyboard, a central processing unit (CPU) 154, an auxiliary storage device 155 such as a hard disk drive (HDD) or a solid state drive (SSD), and a random access memory (RAM) 156.

The output device 151 is a display device such as a display, and displays a result of processing carried out by the CPU 154. The communication device 152 is connected to the network 15 such as the Internet, and transmits and receives various types of data to/from another device connected to the network 15.

The input device 153 is a touch panel, a keyboard, or a mouse, and receives an instruction from the user.

The CPU 154 is a control unit conf iguredto carry out calculation in accordance with a program loaded onto the RAM 156.

The auxiliary storage device 155 is a storage device configured to store various types of data used in the program.

The RAM 156 is a storage device configured to load the program stored in the auxiliary storage device 155. The RAM 156 temporarily stores data.

The control unit 110 of the server apparatus 100 is achieved by the program for causing the CPU 154 to execute processing. This program is stored in the auxiliary storage device 155, loaded onto the RAM 156 for execution, and executed by the CPU 154.

The communication unit 120 is achieved by the communication device 152. The storage unit 130 is achieved by the auxiliary storage device 155 or the RAM 156.

The hardware configuration example of the server apparatus 100 according to this embodiment has been described. Not limited to this, however, the server apparatus 100 may be configured by using other similar hardware.

The information terminal 200 includes a display device 251, a read-only memory (ROM) 252, an operation device 253, a RAM 254, an auxiliary storage device 255, an inter-device communication interface 256, a CPU 257, and a communication device 258.

The display device 251 is a device configured to display image information, such as a liquid crystal display or an organic electro-luminescence (EL) display.

The ROM 252 is a read-only storage device in which a control program or the like has been written.

The operation device 253 is a device configured to receive a user's operation from a button, a switch, a keyboard, or a touch panel for operating the information terminal 200 by a finger touching operation or the like.

The RAM 254 is a storage device configured to load a program stored in the auxiliary storage device 255 to temporarily store data.

The auxiliary storage device 255 is a storage device configured to store various types of data used in the software.

The inter-device communication interface 256 is connected to the navigation device 300 to transmit and receive data. A connection method that the inter-device communication interface 256 has may be wired connection compliant with a standard such as the USB or the HDMI, or wireless connection compliant with a standard such as IEEE 802.11a/b/g/n/ac of a wireless LAN or Bluetooth.

The CPU 257 is a control unit configured to control each unit of the information terminal 200, and carry out calculation in accordance with a program loaded onto the RAM 254.

The communication device 258 is connected to the network 15 such as the Internet by using a wireless communication network, and transmits and receives various types of data to/from the server apparatus 100.

The control unit 210 of the information terminal 200 is achieved by the program for causing the CPU 257 to execute processing. This program is stored in the auxiliary storage device 255, loaded onto the RAM 254 for execution, and executed by the CPU 257.

The communication unit 220 is achieved by the communication device 258. The storage unit 230 is achieved by the auxiliary storage device 255 or the RAM 254. The peripheral device connection unit 240 is achieved by the inter-device communication interface 256.

The hardware configuration example of the information terminal 200 according to this embodiment has been described. Not limited to this, however, the information terminal 200 may be configured by using other similar hardware.

The navigation device 300 includes a display device 351, a ROM 352, an operation device 353, a RAM 354, an auxiliary storage device 355, an inter-device communication interface 356, a positioning sensor 357, a CPU 358, and an inter-vehicle interface 359.

The display device 351 is a device configured to display image information, such as a liquid crystal display or an organic EL display.

The ROM 352 is a read-only storage device in which a control program or the like has been written.

The operation device 353 is a device configured to receive a user's operation from the button, the switch, the keyboard, or the touch panel for operating the navigation device 300 by a finger touching operation or the like.

The RAM 354 is a storage device configured to load a program stored in the auxiliary storage device 355 to temporarily store data.

The auxiliary storage device 355 is a storage device configured to store various types of data used in the software.

The inter-device communication interface 356 is connected to the information terminal 200 to transmit and receive data. A connection method that the inter-device communication interface 356 has may be wired connection compliant with a standard such as the USB or the HDMI, or wireless connection compliant with a standard such as IEEE 802.11a/b/g/n/ac of wireless LAN or Bluetooth.

The positioning sensor 357 is a sensor configured to specify a location to output the location on a coordinate system based on latitude and longitude.

The CPU 358 is a control unit configured to control each unit of the navigation device 300, and carry out calculation in accordance with a program loaded onto the RAM 354.

The inter-vehicle interface 359 is connected to a control area network (CAN) that is a network in the vehicle, and transmits and receives control information such as speed information of the vehicle.

The control unit 310 of the navigation device 300 is achieved by the program for causing the CPU 358 to execute processing. This program is stored in the auxiliary storage device 355, loaded onto the RAM 354 for execution, and executed by the CPU 358.

The peripheral device connection unit 340 is achieved by the inter-device communication interface 356.

The hardware configuration example of the navigation device 300 according to this embodiment has been described. Not limited to this, however, the navigation device 300 may be configured by using other similar hardware.

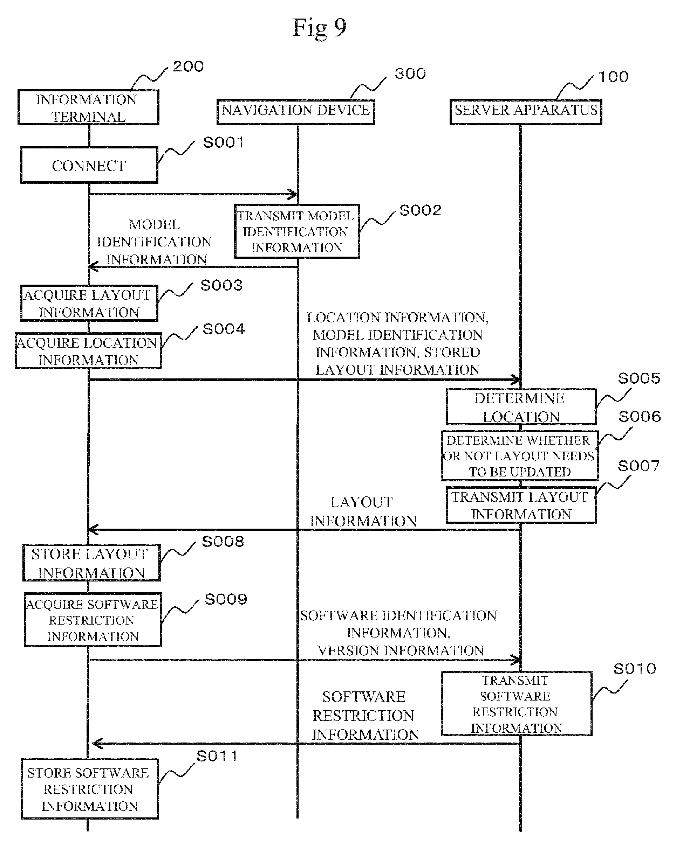

[Description of Operation] Next, an operation of restriction information distribution processing according to this embodiment is described referring to FIG. 9.

FIG. 9 is a diagram illustrating a content of the restriction information distribution processing. The restriction information distribution processing is executed when the information terminal 200 is connected to the navigation device 300.

First, in Step S001, the in-vehicle terminal communication unit 215 of the information terminal 200 requests, when detecting connection to the navigation device 300, the navigation device 300 to transmit device identification information. In Step S002, the information terminal communication unit 313 of the navigation device 300 transmits model identification information to the information terminal 200. Specifically, the information terminal communication unit 313 reads the model identification information (not shown) allocated to the navigation device 300 in a fixed manner to transmit the model identification information to the information terminal 200.

In Step S003, the restricted component generation unit 212 of the information terminal 200 reads cache information storing layout information that affects a restriction screen. Specifically, the restricted component generation unit 212 reads, from the cache, layout information defined by the CSS.

Then, in Step S004, the location specifying unit 214 of the information terminal 200 acquires location information, and the restriction information acquisition unit 216 transmits the location information, the model identification information, and the stored layout information to the server apparatus 100.

In Step S005, the location determination unit 111 of the server apparatus 100 determines a location. Specifically, the location determination unit 111 specifies, by using the received location information, a predetermined region to which the location specified by the location information belongs. For example, the location determination unit 111 specifies an area having a certain geographic range such as a local region, a country, a region, or a city/ward/town/village.

Then, in Step S006, the component layout setting management unit 113 and the component validity setting management unit 114 of the server apparatus 100 determine whether or not the stored layout information needs to be updated. Specifically, the component layout setting management unit 113 and the component validity setting management unit 114 of the server apparatus 100 determine whether or not the stored layout information is valid layout in the location determined in Step S005. When the stored layout information is not valid, the component layout setting management unit 113 and the component validity setting management unit 114 determine that the stored layout information needs to be updated. Specifically, the component layout setting management unit 113 and the component validity setting management unit 114 use and compare the component layout setting information 132b of the component layout setting management unit 132 specified by the model identification information and the component validity setting information 133c of the component validity setting storage unit 133 specified by a combination of the location information represented by the specified region and the model identification information with the stored layout information, and determine that the stored layout information does not need to be updated when there is no inconsistency.

When the stored layout information needs to be updated, in Step S007, the layout distribution unit 115 transmits the layout information to the information terminal 200. Specifically, when it is determined in Step S006 that the stored layout information needs to be updated, the layout distribution unit 115 controls the component layout setting management unit 113 to specify component layout setting information 132b corresponding to the model identification information, and controls the component validity setting management unit 114 to specify component validity setting information 133c corresponding to the model identification information and the location information. Then, the layout distribution unit 115 transmits the component layout setting information 132b and the component validity setting information 133c together as layout information to the information terminal 200.

Then, in Step S008, the restriction information acquisition unit 216 stores the received layout information. Specifically, the restriction information acquisition unit 216 transmits the received layout information to the restricted component generation unit 212.

Then, in Step S009, the restriction information acquisition unit 216 acquires software restriction information. Specifically, the restriction information acquisition unit 216 refers to the software information storage unit 231 to specify a combination of software identification information and version information of software stored to be executable in the information terminal 200. Then, the restriction information acquisition unit 216 extracts a combination of the software restriction information stored in the software restriction information storage unit 232 inconsistent with the combination, and transmits the software identification information and the version information to the server apparatus 100.

In Step S010, the restriction information distribution unit 112 transmits the software restriction information 131c to the information terminal 200. Specifically, the restriction information distribution unit 112 refers, for each combination of the software identification information and the version information that has been transmitted, to the software restriction information storage unit 131 to specify the software restriction information 131c, and transmits the software restriction information to the information terminal 200.

In Step S011, the restriction information acquisition unit 216 stores the software restriction information in the software information storage unit 231.

The content of the restriction information distribution processing has been described. According to the restriction information distribution processing, based on the configuration and the location of the software and the model of the navigation device configured to output display, appropriate layout restriction information can be acquired for the software that is likely to be executed. In other words, display restrictions can be dealt with more easily.

The information distributed by the restriction information distribution processing is actually applied by the following processing. The vehicle information acquisition unit 217 acquires a speed of the vehicle including the navigation device 300 to determine which of a traveling state and a stopped state the vehicle is in. During the traveling, based on the display screen output from the software currently executed in the software execution control unit 213, the restricted component generation unit 212 generates a screen component used for restriction by using the component layout setting information and the component validity setting information. Then, the restriction screen generation unit 211 draws a restriction screen superimposed on the display screen. The in-vehicle terminal communication unit 215 transmits the drawn screen to the output processing unit 312 of the navigation device 300 via the peripheral device connection unit 240. The output processing unit 312 displays and outputs the received restriction screen.

The determination as to whether the vehicle is in the traveling state or not may be executed by the control unit 310 of the navigation device 300, and a result thereof may be transmitted to the information terminal 200 to determine whether or not to execute software restriction.

In order to deal with a case where connection cannot be made to the network 15 because the information terminal 200 is outside a communication range, so as to execute restriction by a predetermined restriction content when software restriction information or layout information cannot be acquired, software restriction information and layout information that are references may be stored in advance in the information terminal 200, and the software restriction information or the layout information may be used when connection cannot be made.

The first embodiment has been described. According to the first embodiment, the display restrictions can be dealt with more easily. More specifically, according to the first embodiment, in the server apparatus 100, the software restriction information dependent on the type of the software installed to be executable in the information terminal 200, the component layout setting information dependent on a design or a display location when the restriction screen is displayed, and the component setting information dependent on a vehicle manufacturer's intension or laws and regulations likely to be varied in control depending on an applied region can be managed in a separate manner. Therefore, time and labor for creating and managing restriction information for covering variations based on all the models of the navigation devices 300, the country where the vehicle travels, and the software included in the information terminal can be reduced.

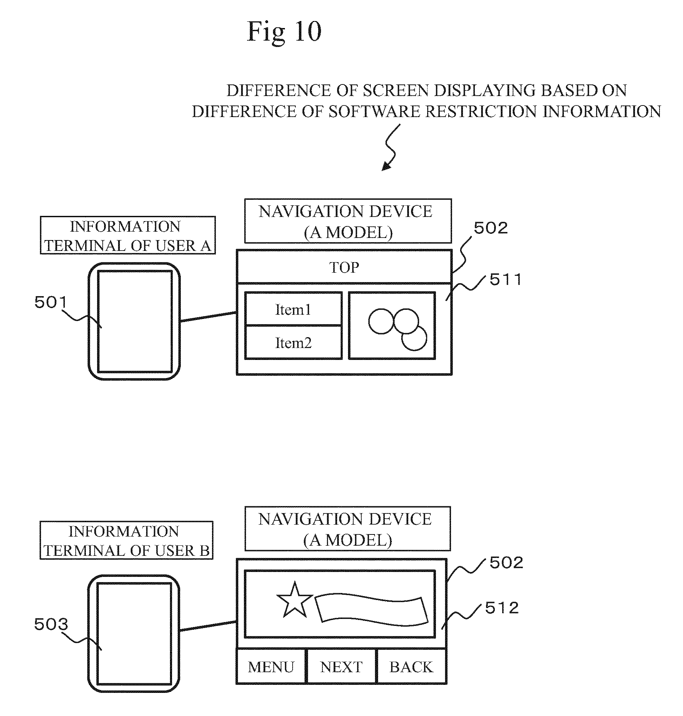

FIG. 10 is a diagram illustrating an example of a difference of screen displaying based on a difference of software restriction information according to the first embodiment. Managing the software restriction information separately from the component layout setting information and the component validity setting information provides remarkable effects when different users' information terminals 200 are connected to the navigation device 300 of the same model.

In other words, different restrictions can be imposed between a state where an information terminal 501 of a user A is connected to a navigation device (model A) 502 and a state where an information terminal 503 of a user B is connected to the navigation device (model A) 502 and software different from that in the information terminal 501 is operated in the information terminal 503. When the information terminal 501 of the user A is connected to the navigation device (model A) 502, a restriction screen 511 can be easily displayed. When the information terminal 503 of the user B is connected to the navigation device (model A) 502, an appropriate restriction screen 512 corresponding to the software can be easily displayed.

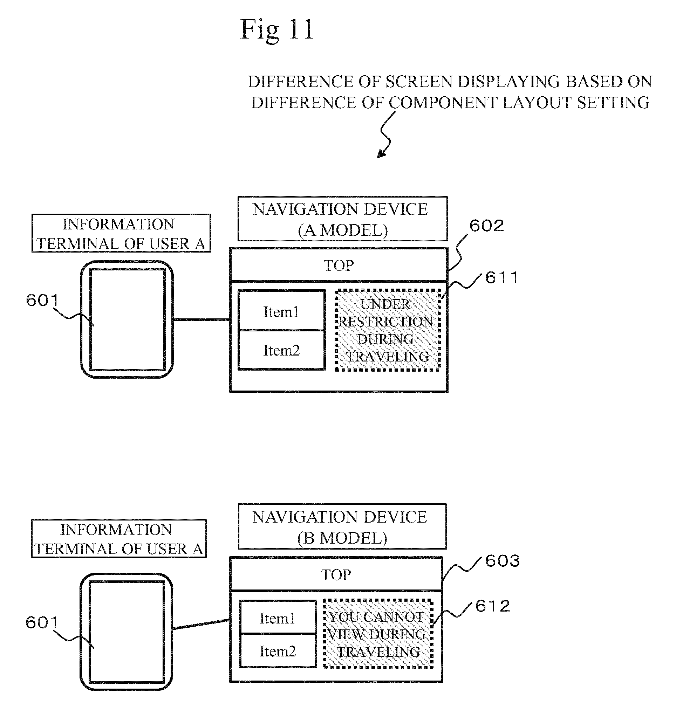

FIG. 11 is a diagram illustrating an example of a difference of screen displaying based on a difference of component layout setting according to the first embodiment. Managing the component layout setting information separately from the software restriction information and the component validity setting information enables a design of a restriction screen to vary depending on a manufacturer of a vehicle including the navigation device 300 even in restriction for the same software, and provides remarkable effects.

In other words, even when an information terminal 601 of the same user A is connected to a navigation device (A model) 602 and a navigation device (model B) 603, and traveling restrictions are imposed on the same image on the same screen of the same software, a design such as a character string or a character size to be displayed can be varied depending on a navigation device. For example, when the information terminal 601 is connected to the navigation device (model A) 602, a mask component 611 can be displayed for an image. When the information terminal 601 is connected to the navigation device (model B) 603, another mask component 612 can be displayed for the image.

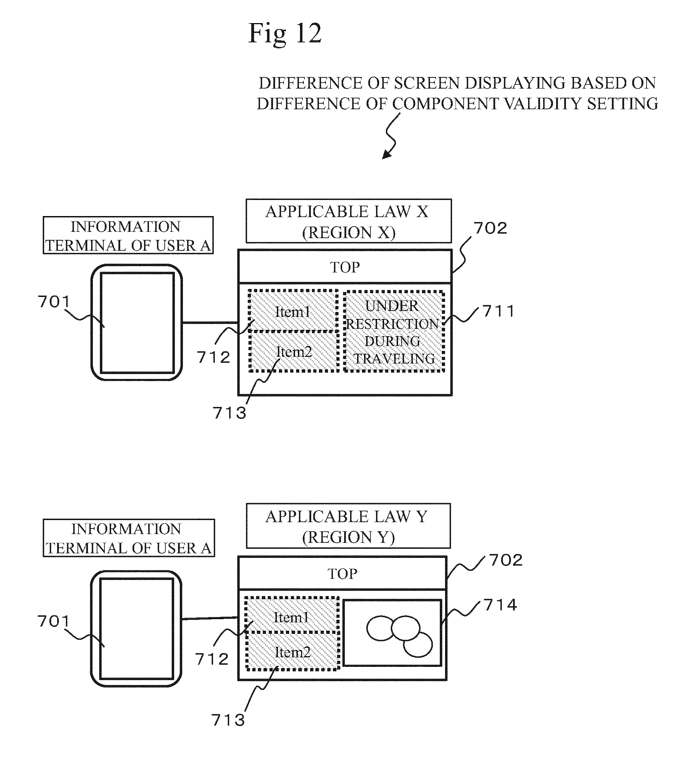

FIG. 12 is a diagram illustrating an example of a difference of screen displaying based on a difference of component validity setting according to the first embodiment. Managing the component validity setting information separately from the software restriction information and the component layout setting information enables a design of a restriction screen to vary depending on a region in which the navigation device 300 exists even in restriction for the same software, and provides remarkable effects.

In other words, when displaying of a moving image during the traveling is inhibited in a region X where an applicable law X is applied while displaying of the moving image during the traveling is not inhibited in a region Y where an applicable law Y is applied, display restrictions can be varied by varying component validity setting.

For example, in a connected state of an information terminal 701 to a navigation device 702, when a mask component 711 is displayed in a part displaying the moving image in the region of the applicable law X, and mask components 712 and 713 are displayed in other parts, namely, "Item 1" and "Item 2", no mask component is displayed in a part displaying the moving image in the region of the applicable law Y while a moving image 714 is reproduced, and the mask components 712 and 713 can be displayed in the other parts, namely, "Item 1" and "Item 2".

According to the first embodiment, the navigation device 300 is configured to input/output data. However, the present invention is not limited to this configuration. For example, the information terminal 200 may be in charge of communication, while the navigation device 300 may be in charge of other operations.

Now, a second embodiment of the present invention configured in such a manner is described. Differences of the second embodiment from the first embodiment are mainly described.

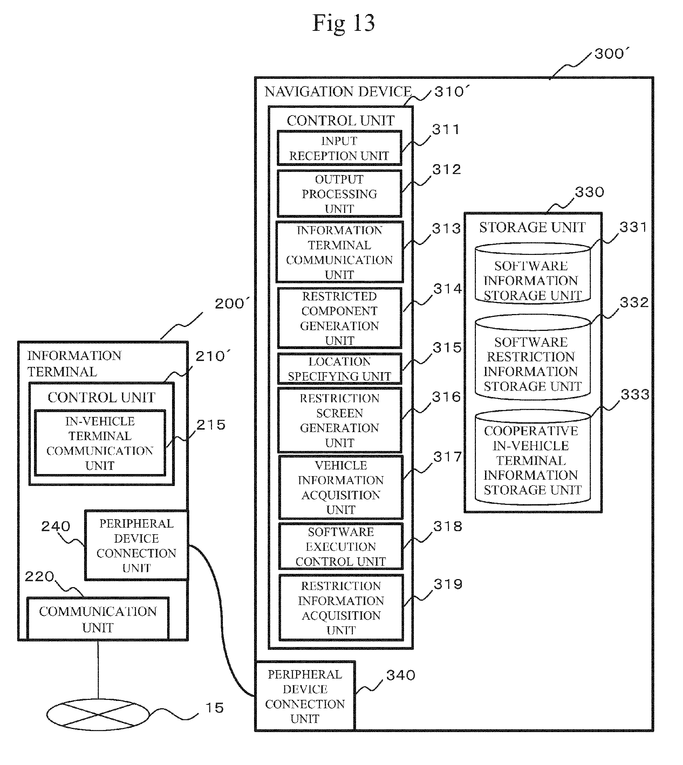

FIG. 13 is a diagram illustrating a configuration of an information terminal 200' and a navigation device 300' according to the second embodiment.

The information terminal 200' according to the second embodiment is configured by removing the storage unit 230 from the information terminal 200 according to the first embodiment and including a control unit 210' configured to avoid carrying out other control while leaving the in-vehicle terminal communication unit 215 in the control unit 210. A control unit 310' of the navigation device 300' includes a restricted component generation unit 314, a location specifying unit 315, a restriction screen generation unit 316, a vehicle information acquisition unit 317, a software execution control unit 318, and a restriction information acquisition unit 319. Those processing units execute processes corresponding to those of the restricted component generation unit 212, the location specifying unit 214, the restriction screen generation unit 211, the vehicle information acquisition unit 217, the software execution control unit 213, and the restriction information acquisition unit 216 included in the control unit 210 of the information terminal 200 according to the first embodiment. The navigation device 300' further includes a storage unit 330. The storage unit 330 includes a software information storage unit 331, a software restriction information storage unit 332, and a cooperative in-vehicle terminal information storage unit 333 that are substantially similar to those of the storage unit 230 of the information terminal 200.

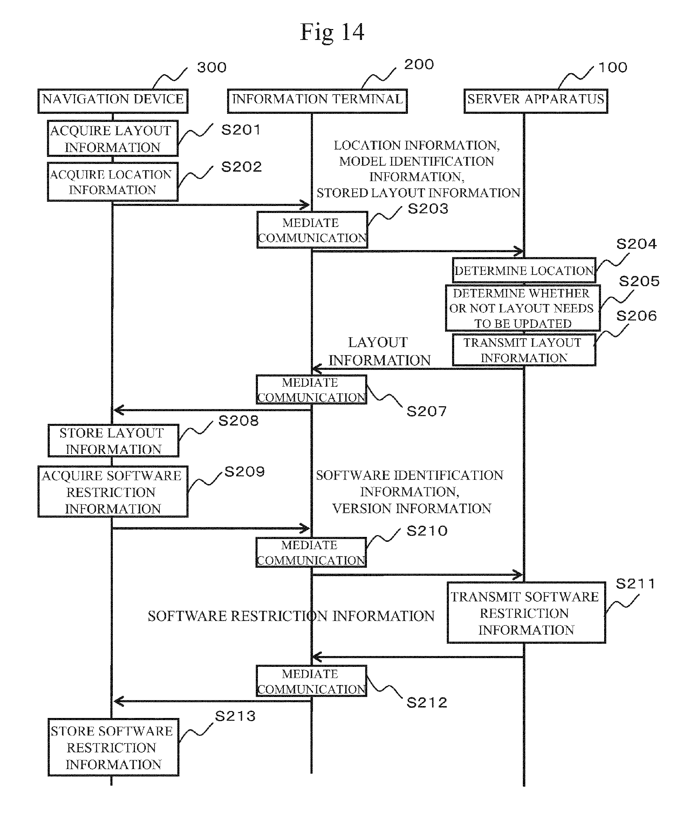

A content of restriction information distribution processing according to the second embodiment is as illustrated in FIG. 14. In Step S201, when the information terminal 200' has been connected to the navigation device 300', the restricted component generation unit 314 of the navigation device 300' reads cache information storing layout information that affects a restriction screen. Specifically, the restricted component generation unit 314 reads, from a cache, layout information defined by the CSS.

Then, in Step S202, the location specifying unit 315 acquires location information, and the restriction information acquisition unit 319 transmits the location information, model identification information, and the stored layout information to a server apparatus 100. Then, in Step S203, the in-vehicle terminal communication unit 215 of the information terminal 200' mediates communication.

In Step S204, the location determination unit 111 of the server apparatus 100 determines a location. Specifically, the location determination unit 111 specifies, by using the received location information, a predetermined region to which the location specified by the location information belongs. For example, the location determination unit 111 specifies an area having a certain geographic range such as a local region, a country, a region, or a city/ward/town/village.

Then, in Step S205, a component layout setting management unit 113 and a component validity setting management unit 114 of the server apparatus 100 determine whether or not the stored layout information needs to be updated. Specifically, the component layout setting management unit 113 and the component validity setting management unit 114 of the server apparatus 100 determine whether or not the stored layout information is valid layout in the location determined in Step S204. When the stored layout information is not valid, the component layout setting management unit 113 and the component validity setting management unit 114 determine that the stored layout information needs to be updated. Specifically, the component layout setting management unit 113 and the component validity setting management unit 114 use and compare component layout setting information 132b of a component layout setting management unit 132 specified by the model identification information and component validity setting information 133c of a component validity setting storage unit 133 specified by a combination of the location information represented by the specified region and the model identification information with the stored layout information, and determine that the stored layout information does not need to be updated when there is no inconsistency.

When the stored layout information needs to be updated, in Step S206, a layout distribution unit 115 transmits the layout information to the information terminal 200'. Specifically, when it is determined in Step S205 that the stored layout information needs to be updated, the layout distribution unit 115 controls the component layout setting management unit 113 to specify component layout setting information 132b corresponding to the model identification information, and controls the component validity setting management unit 114 to specify component validity setting information 133c corresponding to the model identification information and the location information. Then, the layout distribution unit 115 transmits the component layout setting information 132b and the component validity setting information 133c together as layout information to the information terminal 200'. Then, in Step S207, the in-vehicle terminal communication unit 215 of the information terminal 200' mediates communication.

Then, in Step S208, the restriction information acquisition unit 319 stores the received layout information. Specifically, the restriction information acquisition unit 319 transmits the received layout information to the restricted component generation unit 314.

Then, in Step S309, the restriction information acquisition unit 319 acquires software restriction information. Specifically, the restriction information acquisition unit 319 refers to the software information storage unit 331 to specify a combination of software identification information and version information of software stored to be executable in the navigation device 300'. Then, the restriction information acquisition unit 319 extracts a combination of the software restriction information stored in the software restriction information storage unit 332 inconsistent with the combination, and transmits the software identification information and the version information to the server apparatus 100. Then, in Step S210, the in-vehicle terminal communication unit 215 of the information terminal 200' mediates communication.

In Step S211, a restriction information distribution unit 112 transmits the software restriction information 131c to the information terminal 200'. Specifically, the restriction information distribution unit 112 refers, for each combination of the software identification information and the version information that has been transmitted, to the software restriction information storage unit 131 to specify the software restriction information 131c, and transmits the software restriction information to the information terminal 200'. Then, in Step S212, the in-vehicle terminal communication unit 215 of the information terminal 200' mediates communication.

In Step S213, the restriction information acquisition unit 319 stores the software restriction information in the software information storage unit 331.

The content of the restriction information distribution processing according to the second embodiment has been described. According to the restriction information distribution processing, based on the configuration and the location of the software and the model of the navigation device configured to output a display, appropriate layout restriction information can be acquired for the software that is likely to be executed. In other words, display restrictions can be dealt with more easily.

As exemplif iedby the second embodiment, various modifications can be made to the processes. For example, some of the processes can be changed depending on a processing load such as which of the navigation device 300 and the information terminal 200 is to be used to execute processing. In other words, even when processes that the information terminal 200 and the navigation device 300 are in charge of are different, the information terminal 200 and the navigation device 300 are only required to cooperatively operate as an information processing system including a software execution control unit and a display unit configured to display display information.

Further, for example, when there are software having a screen output operated in the navigation device 300 and software having a screen output operated in the information terminal 200, and one of the software modules outputs a screen in a manner of including the other as a partial area of the screen output, by acquiring software restriction information for each software, the screen outputs can be appropriately restricted for both the software modules.

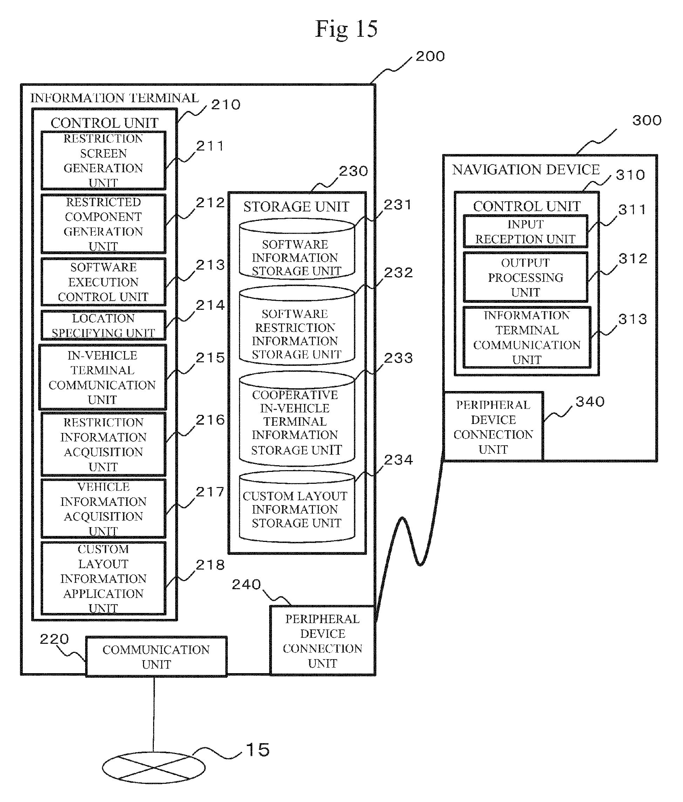

FIG. 15 is a diagram illustrating a third embodiment of the present invention, which enables user customization while the first embodiment is a basis. The third embodiment is basically similar to the first embodiment, and thus differences are mainly described.

As illustrated in FIG. 15, a control unit 210 of an information terminal 200 includes a custom layout information application unit 218, and a storage unit 230 thereof includes a custom layout information storage unit 234.

The custom layout information storage unit 234 is basically information having a structure similar to that of a layout cache included in a restricted component generation unit 212 and is edited by a user. For example, the custom layout information storage unit 234 can store setting information for enabling a change to a favorite font, size, image, or component display location for each user.

The custom layout information application unit 218 replaces, when a vehicle information acquisition unit 217 determines that a vehicle is in a traveling state, a screen component used for restriction by the restricted component generation unit 212 with custom layout information. Inthisway, application of user's custom layout to software can be achieved.

The configuration of the third embodiment has been described.

According to the third embodiment, the layout can be changed based on user's unique circumstances (e.g., wishing to enlarge character due to insufficient power of vision).

In the first to third embodiments, the control lines and the information lines considered necessary for description are illustrated. However, not all control lines or information lines of products illustrated. In effect, almost all the components may be interconnected.

Some or all of the configurations, the functions, or the processing units may be achieved by hardware, for example, through designing by an integrated circuit. The technical elements of the embodiments may be singly applied, or divided into a plurality of parts such as program components and hardware components to be applied.

The embodiments of the present invention have been described.

## Claims

1. A restriction information distribution apparatus, comprising:
a storage unit configured to store software restriction information for specifying a restriction target unit regarding display information of software, component layout setting information for specifying a display mode corresponding to a model of a device configured to display the display information for each display component, which is a restriction target unit of the software, and component validity setting information for specifying whether or not to permit displaying of the display component in a predetermined region;
a communication unit configured to receive, from an external device, software identification information for identifying software that is likely to be executed, model identification information for identifying a model of an output device configured to output the display information of the software, and location information for specifying a location of the output device;
a restriction information distribution unit configured to specify the software restriction information corresponding to the software identification information to transmit the software restriction information to the external device;
a location determination unit configured to determine the predetermined region to which the location specified based on the location information belongs; and
a layout distribution unit configured to specify the component layout setting information corresponding to the model identification information and transmit, together with the component validity setting information corresponding to the predetermined region determined by the location determination unit, the component layout setting information to the external device.

2. A restriction information distribution apparatus according to claim 1, wherein the software restriction information includes information of a component, which is a restriction target unit, for each screen displayed in each software.

3. A restriction information distribution apparatus according to claim 1, wherein the display mode included in the component layout setting information includes at least one of information for defining a location of displaying a component, information for defining a size of the component, or information for defining an appearance of the component.

4. A restriction information distribution apparatus according to claim 1, wherein the component validity setting information includes designation as to whether or not to display the component.

5. A restriction information distribution system, comprising:
an information processing system comprising at least:
a software execution control unit configured to execute software; and
a display unit configured to display display information that is an output of an execution result of the software execution control unit; and
a restriction information distribution apparatus configured to distribute restriction information to the information processing system, wherein:
the restriction information distribution apparatus comprises:
a storage unit configured to store software restriction information for specifying a restriction target unit regarding an output of the software, component layout setting information for specifying a display mode corresponding to a model of a device configured to display the display information for each display component that is a restriction target unit of the software, and component validity setting information for specifying whether or not to permit displaying of the display component in a predetermined region;
a communication unit configured to receive, from the information processing system, software identification information for identifying software that is likely to be executed by the software execution control unit, model identification information for identifying a model to which the display unit configured to display the display information of the software belongs, and location information for specifying a location in which the display unit exists;
a restriction information distribution unit configured to specify the software restriction information corresponding to the software identification information to transmit the software restriction information to the information processing system;
a location determination unit configured to determine the predetermined region to which the location specified based on the location information belongs; and
a layout distribution unit configured to specify the component layout setting information corresponding to the model identification information and transmit, together with the component validity setting information corresponding to the predetermined region determined by the location determination unit, the component layout setting information to the information processing system; and
the display unit of the information processing system outputs the display information for a display component having the component validity setting information determined to be valid in accordance with the restriction target unit specified based on the software restriction information by using the component layout setting information.

6. A restriction information distribution system according to claim 5, wherein the software restriction information includes information of a component, which is a restriction target unit, for each screen displayed in each software.

7. A restriction information distribution system according to claim 5, wherein the display mode included in the component layout setting information includes at least one of information for defining a location of displaying a component, information for defining a size of the component, or information for defining an appearance of the component.

8. A restriction information distribution system according to claim 5, wherein:
the component validity setting information includes designation as to whether or not to display the component; and
the display unit of the information processing system avoids displaying the display information for a display component having the component validity setting information designated not to be displayed in accordance with the restriction target unit specified based on the software restriction information irrespective of the component layout setting information.

9. A restriction information distribution system according to claim 5, wherein the information processing system comprises one of:
a navigation device comprising the software execution control unit and the display unit, and an information terminal in charge of communication between the navigation device and the restriction information distribution apparatus; and
the information terminal comprising the software execution control unit, which is configured to carry out communication to/from the restriction information distribution apparatus, and the navigation device comprising the display unit.
